# EUROPEAN PATENT SPECIFICATION

(11) **EP 3 628 171 B1**
(45) Date of publication and mention of the grant of the patent: **30.10.2024**
(21) Application number: 19199974.7
(22) Date of filing: 26.09.2019
(51) Int. Cl.: A23L 2/46, A23L 2/74

(54) **PRODUCTION OF ORANGE JUICE**
HERSTELLUNG VON ORANGENSAFT
PRODUCTION DE JUS D'ORANGE

(30) Priority: 26.09.2018 EP 18196872
(43) Date of publication of application: 01.04.2020
(73) Proprietor: Tetra Laval Holdings & Finance S.A., 1009 Pully (CH)
(72) Inventor: Fu, Tianjiao, 222 35 Lund (SE); Lanzingh, Christer, 217 48 Malmö (SE); Larsen, Lars Boe, 8330 Bender (DK); Cremonesi, Mayra, 13190-000 São Paulo (BR); Iada, Roberto Tacao, 15-991 278 Mateo Sao Paulo (BR); Fonseca, Aluisio Ragazzi, 33327, Weston, FL (US)
(74) Representative: Tetra Pak - Patent Attorneys SE

(56) References cited:
- TW-A- 201 021 722
- US-A- 4 643 902
- US-A- 4 933 197
- US-A1- 2015 010 683
- R P BATES ET AL: "Principles and practices of small- and medium scale fruit juice processing", 2001, XP055554002, Retrieved from the Internet <URL:https://ucanr.edu/datastoreFiles/234-2085.pdf> [retrieved on 20190208]

## Description

### TECHNICAL FIELD

Embodiments herein relate to a method and a system for producing orange juice by only one membrane filtering.

### BACKGROUND

Production, starting from freshly squeezed orange juice (often referred to as raw orange juice), of an orange juice product that has a natural flavor while at the same time maximizing the shelf life of the orange juice product and minimizing the negative effects on orange juice quality due to pasteurization requires a number of processing steps. In prior art production methods and systems, membrane filtration technology and pasteurization have been used to remove prolong shelf life. TW201021722 A discloses for instance such a system comprising a heat exchanger, a ceramic filter with a pore size of 0.2-1.4 micrometers, an ultrafilter with a pore size of 2-100 nm configured to ultrafiltrate the cooled raw orange juice to produce a permeate and a retentate, a pasteurizer configured to pasteurize the retentate, a mixing unit configured to mix the permeate and the pasteurized retentate.

US 4 933 197 discloses a system comprising a heat exchanger, a microfilter membrane, an ultrafilter membrane and a pasteurisation unit to pasteurize the retentate and a step of recombining the retentate with the permeate.

US2015/010683 A1 discloses a membrane filtration system with a high pressure process or a heating process to remove or inactivate spoilage causing micro-organisms from the food, and an aseptic packaging unit.

US4643902 discloses an ultrafiltration membrane system combined with a heat exchanger, said membrane having a MWCO of 50-100kDa, and further comprising a pasteurizer to inactivate enzymes and treat orange juices.

However, prior art solutions are typically only focused on a single part of the production process. No prior art solution has presented an orange juice product that has a natural flavor that resembles that of freshly pressed orange juice, while at the same time having a shelf life that is similar to the shelf life of pasteurized orange juice.

### SUMMARY

In view of the above, an object of the present disclosure is to improve prior art techniques for producing orange juice having a taste and quality that resembles freshly squeezed juice, while still providing a longer shelf life than freshly squeezed juice.

This object is achieved in a first aspect by a method for producing orange juice by only one membrane filtering. The method comprises cooling raw orange juice. The cooled raw orange juice is ultrafiltrated by a ceramic type ultrafilter having a membrane with a pore size of 19-21 nm and a channel size of 3.5-4.5 mm to produce a permeate and a retentate. The retentate is pasteurized and then mixed with the permeate to produce orange juice having an enzyme pectin esterase (PEU) content that is less than 1 % of the PEU content of the raw orange juice. Packets are aseptically filled with the orange juice produced by the mixing.

By ultrafiltrating the raw orange juice and thereby obtain a retentate and a permeate followed by pasteurizing only the retentate, a minimization of enzymes and microorganisms that are detrimental to the quality of the orange juice is obtained in the orange juice after mixing. By not pasteurizing the permeate, the flavor and aroma components which have smaller molecular size will pass through membrane and retain in the permeate, therefore permeate will retain natural flavor and the freshness of freshly squeezed orange juice. This is advantageous in relation to prior art processing of orange juice, which typically involves direct pasteurization of raw orange juice. The present method according to the first aspect has an effect on the minimizing the heat load on freshly squeezed orange juice and therefore, relatively little, such as maximum 30%, of the total volume of the raw orange juice will pass through heat treatment. As a consequence, the quality of the orange juice, e.g. in terms of flavor, is improved. Setting up the production to obtain an enzyme pectin esterase (PEU) content that is less than 1 % of the PEU content of the raw orange juice has shown to be a very important parameter in an effort to achieve the above stated objectives.

According to the invention, the ultrafiltration is the only membrane filtering between cooling of the raw orange juice and aseptic filing of the orange juice produce. An example of membrane filtration may be microfiltration or a further ultrafiltration. The raw orange juice is only once filtered by a membrane filtering that is the ultrafiltration stated above and that separates the raw orange juice into the retentate and the permeate. Thus, objectives stated in this application are achieved by only one membrane filtering. In addition to that having only one membrane filtering decreases complexity and cost of the method and the system used to obtain the orange juice.

In this context, the membrane filtering is any filtering using membranes being able to filter particles or organisms having micro dimensions (e.g. micrometer).

As will be exemplified in the detailed description below, the method has effects on, i.e. provides certain values for, the lactic bacteria colony forming units (CFU) content, the vitamin C content, the pH value as well as the essential oil content of the orange juice after mixing. These effects are all favorable in terms of retaining the quality and flavor of the orange juice while at the same time provide a shelf life of the orange juice after mixing that is at least similar to that of NFC (not from concentrate) orange juice.

In a second aspect there is provided a system for producing orange juice. The system comprises a heat exchanger configured to cool raw orange juice. A ceramic type ultrafilter of the system having a membrane with a pore size of 19-21 nm and a channel size of 3.5-4.5 mm is configured to ultrafiltrate the cooled raw orange juice to produce a permeate and a retentate. A pasteurizer of the system is configured to pasteurize the retentate. A mixing unit of the system is configured to mix the permeate and the pasteurized retentate to produce orange juice having an enzyme pectin esterase content that is less than 1 % of the enzyme pectin esterase content of the raw orange juice.

An aseptic filling machine of the system is configured to aseptically fill packets with the orange juice produced by the mixing. This further aspect provides effects and advantages corresponding to the effects and advantages as summarized above in connection with the first aspect. All features and variants described herein in connection with the method according to the first aspect may be used for the system according to the second aspect, and vice versa.

### BRIEF DESCRIPTION OF THE DRAWINGS

Embodiments of the invention will now be described, by way of example, with reference to the accompanying schematic drawings, in which:
figure 1 is a schematic illustration of a system for producing orange juice, and
figure 2 is a flowchart of a method for producing orange juice.

### DETAILED DESCRIPTION

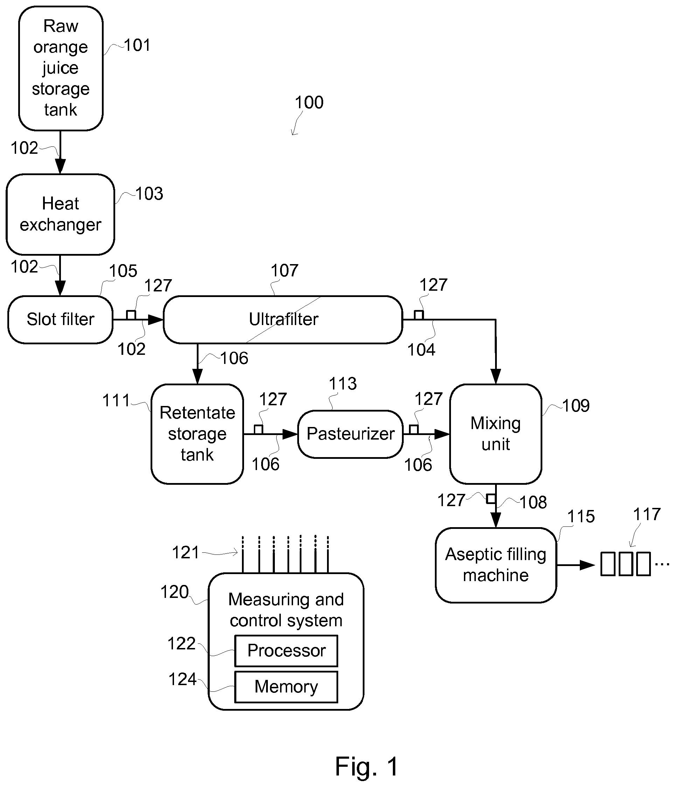

With reference to Fig. 1, an embodiment of a system 100 for producing orange juice 108 that retains much of the quality and flavor of freshly pressed orange juice 102 as summarized above will now be described. The system 100 is connected to a measuring and control system 120 that comprises processing and memory means 122, 124. The processing and memory means 122, 124 are configured with software instructions that obtain measurements via signal lines 121 from schematically illustrated sensors 127 in the system 100 and also control the system 100 to perform the processing as described herein. As the skilled person will realize, the sensors 127 are configured such that they provide measurement signals representative of any desirable parameter related to the production of orange juice 102, as will be discussed further in the following.

The system 100 comprises a storage tank 101 that holds raw orange juice 102 that has been obtained according to known techniques, e.g. by means of pressing freshly harvested oranges in an appropriately configured orange press.

The raw orange juice 102 is passed through a heat exchanger 103 to obtain a suitable temperature for the subsequent filtration steps. It has been found that a suitable temperature may be in the interval 14-16 °C. For example, a heat exchanger of the type the company Alfa Laval offers under the name "C3-SR" may be used for this, or any other suitable heat exchanger may be used.

A conventional slot filter 105 is arranged downstream the heat exchanger 103 to remove undesired large pulp particles from the raw orange juice 102.

An ultrafilter 107 is arranged downstream the slot filter 105 to separate the raw orange juice 102 into a permeate 104 and a retentate 106. The ultrafilter 107 is a ceramic type filter having a membrane with a pore size of 19-21 nm, or a pore size of 20 nm, and a channel size of 3,5-4,5 mm, or a channel size of 4 mm. The main function of the ultrafilter 107 is to separate the inlet stream into two other streams; the retentate 106 and the permeate 104. To do this separation a pressure of 2,3-2,7 bar, or more specifically a pressure of 2,5 bar, is applied to the raw orange juice 102 and the product is fed through the ceramic membrane described above. The retentate 106 is retained at this membrane and the permeate 104 passes the membrane. The concentration factor of the ultrafilter 107 is in the range of 2,7 to 3,4. The concentration factor is determined as the starting volume divided by the end volume, i.e. the volume of raw juice 102 that enters the ultrafilter 107 divided by the volume of retentate 106 that leaves the ultrafilter 107.

The retentate 106 that exits the ultrafilter 107 enters a retentate storage tank 111. The retentate storage tank 111 may be a buffer tank and it has a jacket though which ice water may flow to keep the retentate 106 at a temperature lower than 14°C. The retentate storage tank 111 may also have an agitator to homogenize the retentate 106. A pasteurizer 113 receives the retentate 106 from the retentate storage tank 111 and pasteurizes the retentate 106. For example, the pasteurizer 113 may be a tubular heat exchanger that heats the retentate 106 to a temperature of at least 95 °C by indirect heat exchange. The retentate 106 is kept at minimum 95 °C for at least 30 seconds to inactivate enzymes and kill deteriorating and pathogenic microorganisms.

A mixing unit 109 is connected such that it receives the permeate 104 from the ultrafilter 107, and is connected such that it receives the pasteurized retentate 106 from the pasteurizer 113. The mixing unit 109 is further configured to mix the permeate 104 and the pasteurized retentate 106 to produce orange juice 108. The mixing unit 109 may be an aseptic storage tank, which may include a flow re-circulator and/or an agitator for efficiently mixing the retentate 106 and the permeate 104. Mixing may be achieved in other ways, for example by using so called in-line mixing, where the permeate 104 and the retentate 106 are fed into the same fluid line, for example via a branch pipe. The mixture of the permeate 104 and the retentate 106 forms the final orange juice 108.

An aseptic filling machine 115 is connected to receive the orange juice 108 from the mixing unit 109 and is arranged to aseptically fill packets 117 with the orange juice 108. The filling machine may be any conventional machine built for aseptically filling packets with liquid food.

As will be described below, the system 100 is operated to produce orange juice 108 from raw orange juice 102. Various parameters are obtained from the raw orange juice 102, the permeate 104, the retentate 106, before and after passing through the pasteurizer 113, and the orange juice 108 after mixing in the mixing unit 109, as will be exemplified in more detail below. The parameters are obtained by the described process and may be measured by means of the sensors 127 as well as by means of sampling and subsequent laboratory analysis as follows:
pH values are obtained by conventional pH meters. Brix values are obtained by conventional Brix meters. Vitamin C values are obtained by conventional methods using sampling and subsequent laboratory titration analysis. Enzyme values are obtained by sampling and by following the procedure for PEU test described in "Citrus Processing: Quality Control and Technology" by Dan A. Kimball. Total lactic bacteria values and listeria monocytogenes values are obtained by sampling and subsequent conventional laboratory methods. Essential oil values are obtained by using the Scott Method (Bromide-Bromate solution), also described in "Citrus Processing: A Complete Guide" by Dan A. Kimball. The essential oil is the combination of oils (hydrocarbons) present in oranges, which typically comprise of more than 90% D-limonene. Color and lightness values are obtained by colorimeter measurements, by using conventional equipment such as Konica Minolta type CM-2600d spectrophotometer. Acidity (nitric acid) values are obtained by using sodium hydroxide titration method.

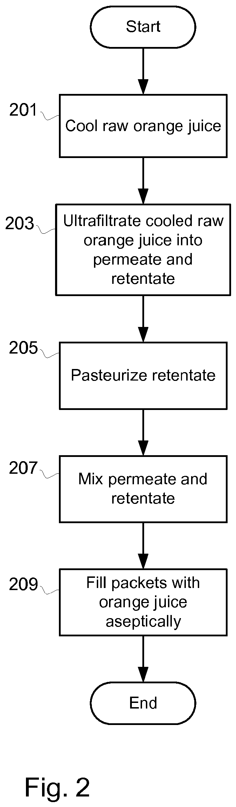

Turning now to Fig. 2 and with continued reference to Fig. 1, software instructions that are stored in the memory 124 may be executed by the processor 122 in the measuring and control system 120 in order to obtain measurable values and to provide control signals to the system 100, via the signal lines 121, and thereby perform a method for producing orange juice 108 that has the values and properties discussed herein.

Such a method comprises cooling 201 raw orange juice 102 and, as exemplified in Fig. 1, the raw orange juice 102 may originate in the storage tank 101 and be cooled in the heat exchanger 103 to a temperature that is suitable for the subsequent ultrafiltration.

The cooled raw orange juice 102 is ultrafiltrated 203 in the ultrafilter 107 to produce a permeate 104 and a retentate 106. A suitable temperature at which the raw orange juice 102 is ultrafiltrated is in the range of 14-16 °C. As indicated in Fig. 1, the cooled raw orange juice 102 may optionally have been subjected to filtering in the slot filter 105 before being ultrafiltrated in the ultrafilter 107.

The retentate 106 that emanates from the ultrafiltration 203 is pasteurized 205 in the pasteurizer 113. Optionally, the retentate 104 may exit from the ultrafilter 107 into the retentate storage tank 111 prior to being provided to the pasteurizer 113. With regards to the pasteurization 205, the pasteurization temperature is 95 °C and the retentate is held at this temperature for at least 30 seconds.

The permeate 104 and the pasteurized retentate 106 is mixed 207 in the mixing unit 109 to produce orange juice 108. The orange juice 108 has an enzyme pectin esterase (PEU) content that is less than 1% of the PEU content of the raw orange juice 102.

Packets 117 are then aseptically filled 209 with the orange juice 108 that is obtained by the mixing 207.

In an embodiment, the raw orange juice 102 that enters the filter 107 is not been subjected to any prior microfiltration, ultrafiltration, nanofiltration or filtration by reverse osmosis, while the neither the permeate 104 nor the retentate 106 that leaves the filter 107 have been subjected to any subsequent microfiltration, ultrafiltration, nanofiltration or filtration by reverse osmosis. In other words, the only filtration that is used in the process, not counting courser filtration than microfiltration such as the filtering in the slot filter 105, is one step of ultrafiltration.

In the method for producing orange juice 108 it has been found that the retentate 106, before the pasteurization 205, should have a PEU content in the interval 180% to 190% of the PEU content of the raw orange juice 102, and the retentate 106, after the pasteurization 205, should have a PEU content in the interval 0.5% to 0.7% of the PEU content of the raw orange juice 102. Also, it was found that the permeate 104 should have a PEU content in the interval 1.1% to 1.3% of the PEU content of the raw orange juice 102.

In the method for producing orange juice 108, in the orange juice 108 produced by the mixing 207, the number of lactic bacteria colony forming units, CFU, per milliliter is less than 1% of the number of lactic bacteria CFU per milliliter in the raw orange juice 102. Furthermore, in the retentate 106, before the pasteurization 205, the number of lactic bacteria CFU per milliliter is in the interval 900% to 1100% of the number of lactic bacteria CFU per milliliter in the raw orange juice 102, and in the retentate 106, after the pasteurization 205, the number of lactic bacteria CFU per milliliter is in the interval 0.5% to 0.7% of the number of lactic bacteria CFU per milliliter in the raw orange juice 102. Also, it was found that in the permeate 104, the number of lactic bacteria CFU per milliliter is in the interval 0.5% to 0.7% of the number of lactic bacteria CFU per milliliter in the raw orange juice 102.

In the method for producing orange juice 108 it has been found that, in the orange juice 108 produced by the mixing 207, the vitamin C content is more than 99% of the vitamin C content of the raw orange juice (102). Furthermore, in the retentate 106, before the pasteurization 205, the vitamin C content is in the interval 99% to 100% of the vitamin C content of the raw orange juice 102, and in the retentate 106, after the pasteurization 207, the vitamin C content is in the interval 95% to 97% of the vitamin C content of the raw orange juice 102. Also, it was found that in the permeate 104, the vitamin C content is in the interval 101% to 103% of the vitamin C content of the raw orange juice 102.

In the method for producing orange juice 108 it has been found that, in the orange juice 108 produced by the mixing 207, the pH value is in the interval 97% to 98% of the pH value of the raw orange juice 102. Furthermore, in the retentate 106, before the pasteurization 205, the pH value is in the interval 99.7% to 99.9% of the pH value of the raw orange juice 102, and in the retentate 106, after the pasteurization 207, the pH value is in the interval 100% to 102% of the pH value of the raw orange juice 102. Also, it was found that in the permeate 104, the pH value is in the interval 98% to 99% of the pH value of the raw orange juice 102.

In the method for producing orange juice 108 it has been found that, in the orange juice 108 produced by the mixing 207, the essential oil content is more than 95% of the essential oil content of the raw orange juice 102. Furthermore, in the retentate 106, before the pasteurization 205, the essential oil content is in the interval 210% to 230% of the essential oil content of the raw orange juice 102, and in the retentate 106, after the pasteurization 205, the essential oil content is in the interval 200% to 210% of the essential oil content of the raw orange juice 102. Also, it was found that in the permeate 104, the essential oil content is in the interval 4% to 6% of the essential oil content of the raw orange juice 102.

Detailed results from operation of the system 100 according to the method described above have resulted in parameter values as specified in tables 1a-c as follows:

**Table 1a:**

| | pH | Brix | Vitamin C (ppm) | Enzyme (PEU) |
|---|---|---|---|---|
| Raw orange juice 102 | 4.06 | 8.20 | 390.273 | 2.67e-3 |
| Retentate 106 before pasteurization 205 | 4.05 | 8.45 | 388.459 | 4.95e-3 |
| Retentate 106 after pasteurization 205 | 4.10 | 7.85 | 374.537 | 1.61e-5 |
| Permeate 104 | 4.00 | 7.80 | 396.543 | 3.15e-5 |
| Orange juice 108 | 3.95 | 8.00 | 388.988 | 2.03e-5 |
| Orange juice 108 relative raw orange juice 102 | 97.29% | 97.56% | 99.67% | 0.76% |

**Table 1b:**

| | Acidity (g nitric acid/100g) | Total lactic bacteria (UFC/ml) | Listeria monocytogenes | Essential oil (%) |
|---|---|---|---|---|
| Raw orange juice 102 | 0.61 | 1.75e3 | Absent in 25ml | 0.062 |
| Retentate 106 before pasteurization 205 | 0.66 | 1.75e4 | Absent in 25ml | 0.1355 |
| Retentate 106 after pasteurization 205 | 0.61 | 10.0 | Absent in 25ml | 0.127 |
| Permeate 104 | 0.59 | 10.0 | Absent in 25ml | 0.003 |
| Orange juice 108 | 0.61 | 10.0 | Absent in 25ml | 0.06 |
| Orange juice 108 relative raw orange juice 102 | 100.00% | 0.57% | - | 96.77% |

**Table 1c:**

| | a (color) green | b (color) red | L (lightness) | Color h (hue angle) |
|---|---|---|---|---|
| Raw orange juice 102 | -1.81 | 12.23 | 35.84 | 98.42 |
| Retentate 106 before pasteurization 205 | -1.53 | 20.79 | 45.29 | 94.21 |
| Retentate 106 after pasteurization 205 | -1.66 | 22.43 | 45.29 | 94.22 |
| Permeate 104 | -2.61 | 4.57 | 43.65 | 119.64 |
| Orange juice 108 | -2.32 | 15.54 | 41.92 | 98.50 |
| Orange juice 108 relative raw orange juice 102 | 128.18% | 127.06% | 116.95% | 100.09% |

Other tests show similar results. Producing a juice in the way described above such that the discussed ranges are obtained, provides a juice has a taste and quality that resembles freshly squeezed juice. At the same time, the shelf life of the juice 108 is much longer than freshly squeezed juice, more than 60 days when stored in a temperature of up to 5 °C, or even up to 8 °C.

## Claims

1. A method for producing orange juice (108) by only one membrane filtering, comprising:
- cooling (201) raw orange juice (102),
- ultrafiltrating (203) the cooled raw orange juice (102) to produce a permeate (104) and a retentate (106) by a ceramic type ultrafilter (107) having a membrane with a pore size of 19-21 nm and a channel size of 3.5-4.5 mm;
- pasteurizing (205) the retentate (106),
- mixing (207) the permeate (104) and the pasteurized retentate (106) to produce orange juice (108) having an enzyme pectin esterase, PEU, content that is less than 1% of the PEU content of the raw orange juice (102), and
- aseptically filling (209) packets (117) with the orange juice (108) produced by the mixing.

2. The method of claim 1, wherein:
- the retentate (106), before the pasteurization, has a PEU content in the interval 180% to 190% of the PEU content of the raw orange juice (102), and
- the retentate (106), after the pasteurization, has a PEU content in the interval 0.5% to 0.7% of the PEU content of the raw orange juice (102).

3. The method of claim 1 or claim 2, wherein:
- the permeate (104) has a PEU content in the interval 1.1% to 1.3% of the PEU content of the raw orange juice (102).

4. The method of any of claims 1 to 3, wherein:
- in the orange juice (108) produced by the mixing, the number of lactic bacteria colony forming units, CFU, per milliliter is less than 1% of the number of lactic bacteria CFU per milliliter in the raw orange juice (102).

5. The method of any of claims 1 to 4, wherein:
- in the retentate (106), before the pasteurization, the number of lactic bacteria CFU per milliliter is in the interval 900% to 1100% of the number of lactic bacteria CFU per milliliter in the raw orange juice (102), and
- in the retentate (106), after the pasteurization, the number of lactic bacteria CFU per milliliter is in the interval 0.5% to 0.7% of the number of lactic bacteria CFU per milliliter in the raw orange juice (102).

6. The method of any of claims 1 to 5, wherein:
- in the permeate (104), the number of lactic bacteria CFU per milliliter is in the interval 0.5% to 0.7% of the number of lactic bacteria CFU per milliliter in the raw orange juice (102).

7. The method of any of claims 1 to 6, wherein:
- in the orange juice (108) produced by the mixing, the vitamin C content is more than 99% of the vitamin C content of the raw orange juice (102).

8. The method of any of claims 1 to 7, wherein:
- in the retentate (106), before the pasteurization, the vitamin C content is in the interval 99% to 100% of the vitamin C content of the raw orange juice (102), and
- in the retentate (106), after the pasteurization, the vitamin C content is in the interval 95% to 97% of the vitamin C content of the raw orange juice (102).

9. The method of any of claims 1 to 8, wherein:
- in the permeate (104), the vitamin C content is in the interval 101% to 103% of the vitamin C content of the raw orange juice (102).

10. The method of any of claims 1 to 9, wherein:
- in the orange juice (108) produced by the mixing, the essential oil content is more than 95% of the essential oil content of the raw orange juice (102).

11. The method of any of claims 1 to 10, wherein:
- in the retentate (106), before the pasteurization, the essential oil content is in the interval 210% to 230% of the essential oil content of the raw orange juice (102), and
- in the retentate (106), after the pasteurization, the essential oil content is in the interval 200% to 210% of the essential oil content of the raw orange juice (102).

12. The method of any of claims 1 to 11, wherein:
- in the permeate (104), the essential oil content is in the interval 4% to 6% of the essential oil content of the raw orange juice (102).

13. The method of any of claims 1 to 12, wherein the ultrafiltration (203) is performed at a temperature in the range 14-16 degrees Celsius.

14. A system (100) for producing orange juice (108) by only one membrane filtering, comprising:
- a heat exchanger (103) configured to cool raw orange juice (102),
- a ceramic type ultrafilter (107) configured to ultrafiltrate the cooled raw orange juice (102) to produce a permeate (104) and a retentate (106), and having a membrane with a pore size of 19-21 nm and a channel size of 3.5-4.5 mm;
- a pasteurizer (113) configured to pasteurize the retentate (106),
- a mixing unit (109) configured to mix the permeate (104) and the pasteurized retentate (106) to produce orange juice (108) having an enzyme pectin esterase content that is less than 1 % of the enzyme pectin esterase content of the raw orange juice (102), and
- an aseptic filling machine (115) configured to aseptically fill packets (117) with the orange juice (108) produced by the mixing unit (109).

15. The system of claim 14, where the ultrafilter (107) comprises a ceramic membrane having a pore size of 20 nanometers and a channel size of 4 millimeters.

## Patentansprüche

1. Verfahren zur Herstellung von Orangensaft (108) mittels nur einer Membranfiltration, umfassend:
- Kühlen (201) von rohem Orangensaft (102),
- Ultrafiltrieren (203) des gekühlten rohen Orangensafts (102) durch einen Ultrafilter (107) vom Keramiktyp, der eine Membran mit einer Porengröße von 19 bis 21 nm und einer Kanalgröße von 3,5 bis 4,5 mm aufweist, um ein Permeat (104) und ein Retentat (106) herzustellen,
- Pasteurisieren (205) des Retentats (106);
- Mischen (207) des Permeats (104) und des pasteurisierten Retentats (106), um Orangensaft (108) mit einem Gehalt an Enzym Pektinesterase, PEU, herzustellen, der kleiner als 1 % des PEU-Gehalts des rohen Orangensafts (102) ist, und
- aseptisches Füllen (209) von Packungen (117) mit dem durch das Mischen hergestellten Orangensaft (108).

2. Verfahren nach Anspruch 1, wobei:
- das Retentat (106) vor der Pasteurisierung einen PEU-Gehalt im Intervall von 180 % bis 190 % des PEU-Gehalts des rohen Orangensafts (102) hat, und
- das Retentat (106) nach der Pasteurisierung einen PEU-Gehalt im Intervall von 0,5 % bis 0,7 % des PEU-Gehalts des rohen Orangensafts (102) hat.

3. Verfahren nach Anspruch 1 oder Anspruch 2, wobei:
- das Permeat (104) einen PEU-Gehalt im Intervall von 1,1 % bis 1,3 % des PEU-Gehalts des rohen Orangensafts (102) hat.

4. Verfahren nach einem der Ansprüche 1 bis 3, wobei:
- in dem durch das Mischen hergestellten Orangensaft (108) die Anzahl der Kolonie bildenden Einheiten, CFU, der Milchsäurebakterien pro Milliliter kleiner als 1 % der Anzahl der CFU der Milchsäurebakterien pro Milliliter in dem rohen Orangensaft (102) ist.

5. Verfahren nach einem der Ansprüche 1 bis 4, wobei:
- in dem Retentat (106) vor der Pasteurisierung die Anzahl der CFU der Milchsäurebakterien pro Milliliter im Intervall von 900 % bis 1100 % der Anzahl der CFU der Milchsäurebakterien pro Milliliter in dem rohen Orangensaft (102) liegt, und
- in dem Retentat (106) nach der Pasteurisierung die Anzahl der CFU der Milchsäurebakterien pro Milliliter im Intervall von 0,5 % bis 0,7 % der Anzahl der CFU der Milchsäurebakterien pro Milliliter in dem rohen Orangensaft (102) liegt.

6. Verfahren nach einem der Ansprüche 1 bis 5, wobei:
- in dem Permeat (104) die Anzahl der CFU der Milchsäurebakterien pro Milliliter im Intervall von 0,5 % bis 0,7 % der Anzahl der CFU der Milchsäurebakterien pro Milliliter in dem rohen Orangensaft (102) liegt.

7. Verfahren nach einem der Ansprüche 1 bis 6, wobei:
- der Gehalt an Vitamin C in dem durch das Mischen hergestellten Orangensaft (108) mehr als 99 % des Gehalts an Vitamin C des rohen Orangensafts (102) beträgt.

8. Verfahren nach einem der Ansprüche 1 bis 7, wobei:
- der Gehalt an Vitamin C in dem Retentat (106) vor der Pasteurisierung im Intervall von 99 % bis 100 % des Gehalts an Vitamin C des rohen Orangensafts (102) liegt, und
- der Gehalt an Vitamin C in dem Retentat (106) nach der Pasteurisierung im Intervall von 95 % bis 97 % des Gehalts an Vitamin C des rohen Orangensafts (102) liegt.

9. Verfahren nach einem der Ansprüche 1 bis 8, wobei:
- der Gehalt an Vitamin C in dem Permeat (104) im Intervall von 101 % bis 103 % des Gehalts an Vitamin C des rohen Orangensafts (102) liegt.

10. Verfahren nach einem der Ansprüche 1 bis 9, wobei:
- der Gehalt an ätherischem Öl in dem durch das Mischen hergestellten Orangensaft (108) mehr als 95 % des Gehalts an ätherischem Öl des rohen Orangensafts (102) beträgt.

11. Verfahren nach einem der Ansprüche 1 bis 10, wobei :
- der Gehalt an ätherischem Öl in dem Retentat (106) vor der Pasteurisierung im Intervall von 210 % bis 230 % des Gehalts an ätherischem Öl des rohen Orangensafts (102) liegt, und
- der Gehalt an ätherischem Öl in dem Retentat (106) nach der Pasteurisierung im Intervall von 200 % bis 210 % des Gehalts an ätherischem Öl des rohen Orangensafts (102) liegt.

12. Verfahren nach einem der Ansprüche 1 bis 11, wobei :
- der Gehalt an ätherischem Öl in dem Permeat (104) im Intervall von 4 % bis 6 % des Gehalts an ätherischem Öl des rohen Orangensafts (102) liegt.

13. Verfahren nach einem der Ansprüche 1 bis 12, wobei die Ultrafiltration (203) bei einer Temperatur im Bereich von 14 bis 16 Grad Celsius durchgeführt wird.

14. System (100) zur Herstellung von Orangensaft (108) mittels nur einer Membranfiltration, umfassend:
- einen Wärmetauscher (103), der ausgestaltet ist, um rohen Orangensaft (102) zu kühlen,
- einen Ultrafilter (107) vom Keramiktyp, der ausgestaltet ist, um den gekühlten rohen Orangensaft (102) Ultrafiltration zu unterziehen, um ein Permeat (104) und ein Retentat (106) herzustellen, und der eine Membran mit einer Porengröße von 19 bis 21 nm und einer Kanalgröße von 3,5 bis 4,5 mm aufweist;
- einen Pasteurisierer (113), der ausgestaltet ist, um das Retentat (106) zu pasteurisieren,
- eine Mischeinheit (109), die ausgestaltet ist, um das Permeat (104) und das pasteurisierte Retentat (106) zu mischen, um Orangensaft (108) mit einem Gehalt an Enzym Pektinesterase, PEU, herzustellen, der kleiner als 1 % des Gehalts an Enzym Pektinesterase des rohen Orangensafts (102) ist, und
- eine aseptische Füllmaschine (115), die ausgestaltet ist, um aseptisch Packungen (117) mit dem Orangensaft (108) zu füllen, der durch die Mischeinheit (109) hergestellt wurde.

15. System nach Anspruch 14, wobei der Ultrafilter (107) eine Keramikmembran mit einer Porengröße von 20 Nanometern und einer Kanalgröße von 4 Millimetern umfasst.

## Revendications

1. Procédé pour la production de jus d'orange (108) par seulement une filtration sur membrane, comprenant :
- le refroidissement (201) de jus d'orange brut (102),
- l'ultrafiltration (203) du jus d'orange brut (102) refroidi pour produire un perméat (104) et un rétentat (106) par un ultrafiltre de type céramique (107) ayant une membrane dotée d'une taille de pores de 19 à 21 nm et d'une taille de canaux de 3,5 à 4,5 mm ;
- la pasteurisation (205) du rétentat (106),
- le mélange (207) du perméat (104) et du rétentat (106) pasteurisé pour produire du jus d'orange (108) ayant une teneur en enzyme pectine estérase, PEU, qui est moins de 1 % de la teneur en PEU du jus d'orange brut (102), et
- le remplissage de manière aseptique (209) de paquets (117) avec le jus d'orange (108) produit par le mélange.

2. Procédé selon la revendication 1,
- le rétentat (106), avant la pasteurisation, ayant une teneur en PEU dans l'intervalle de 180 % à 190 % de la teneur en PEU du jus d'orange brut (102), et
- le rétentat (106), après la pasteurisation, ayant une teneur en PEU dans l'intervalle de 0,5 % à 0,7 % de la teneur en PEU du jus d'orange brut (102) .

3. Procédé selon la revendication 1 ou la revendication 2,
- le perméat (104) ayant une teneur en PEU dans l'intervalle de 1,1 % à 1,3 % de la teneur en PEU du jus d'orange brut (102).

4. Procédé selon l'une quelconque des revendications 1 à 3,
- dans le jus d'orange (108) produit par le mélange, le nombre d'unités formant colonie, UFC, de bactéries lactiques, par millilitre étant de moins de 1 % du nombre d'UFC de bactéries lactiques par millilitre dans le jus d'orange brut (102).

5. Procédé selon l'une quelconque des revendications 1 à 4,
- dans le rétentat (106), avant la pasteurisation, le nombre d'UFC de bactéries lactiques par millilitre étant dans l'intervalle de 900 % à 1 100 % du nombre d'UFC de bactéries lactiques par millilitre dans le jus d'orange brut (102), et
- dans le rétentat (106), après la pasteurisation, le nombre d'UFC de bactéries lactiques par millilitre étant dans l'intervalle de 0,5 % à 0,7 % du nombre d'UFC de bactéries lactiques par millilitre dans le jus d'orange brut (102).

6. Procédé selon l'une quelconque des revendications 1 à 5,
- dans le perméat (104), le nombre d'UFC de bactéries lactiques par millilitre étant dans l'intervalle de 0,5 % à 0,7 % du nombre d'UFC de bactéries lactiques par millilitre dans le jus d'orange brut (102).

7. Procédé selon l'une quelconque des revendications 1 à 6,
- dans le jus d'orange (108) produit par le mélange, la teneur en vitamine C étant supérieure à 99 % de la teneur en vitamine C du jus d'orange brut (102) .

8. Procédé selon l'une quelconque des revendications 1 à 7,
- dans le rétentat (106), avant la pasteurisation, la teneur en vitamine C étant dans l'intervalle de 99 % à 100 % de la teneur en vitamine C du jus d'orange brute (102), et
- dans le rétentat (106), après la pasteurisation, la teneur en vitamine C étant dans l'intervalle de 95 % 97 % de la teneur en vitamine C du jus d'orange brute (102).

9. Procédé selon l'une quelconque des revendications 1 à 8,
- dans le perméat (104), la teneur en vitamine C étant dans l'intervalle de 101 % à 103 % de la teneur en vitamine C du jus d'orange brut (102).

10. Procédé selon l'une quelconque des revendications 1 à 9,
- dans le jus d'orange (108) produit par le mélange, la teneur en huiles essentielles étant de plus de 95 % de la teneur en huiles essentielles du jus d'orange brut (102).

11. Procédé selon l'une quelconque des revendications 1 à 10,
- dans le rétentat (106), avant la pasteurisation, la teneur en huiles essentielles étant dans l'intervalle de 210 % à 230 % de la teneur en huiles essentielles du jus d'orange brut (102), et
- dans le rétentat (106), après la pasteurisation, la teneur en huiles essentielles étant dans l'intervalle de 200 % à 210 % de la teneur en huiles essentielles du jus d'orange brut (102).

12. Procédé selon l'une quelconque des revendications 1 à 11,
- dans le perméat (104), la teneur en huiles essentielles étant dans l'intervalle de 4 % à 6 % de la teneur en huiles essentielles du jus d'orange brut (102).

13. Procédé selon l'une quelconque des revendications 1 à 12, l'ultrafiltration (203) étant réalisée à une température dans la plage de 14 à 16 degrés Celsius.

14. Système (100) pour la production de jus d'orange (108) par une seule filtration sur membrane, comprenant :
- un échangeur de chaleur (103) configuré pour refroidir du jus d'orange brut (102),
- un ultrafiltre de type céramique (107) configuré pour ultrafiltrer le jus d'orange brut (102) refroidi pour produire un perméat (104) et un rétentat (106), et ayant une membrane dotée d'une taille de pores de 19 à 21 nm et d'une taille de canaux de 3,5 à 4,5 mm ;
- un pasteurisateur (113) configuré pour pasteuriser le rétentat (106),
- une unité de mélange (109) configurée pour mélanger le perméat (104) et le rétentat (106) pasteurisé pour produire du jus d'orange (108) ayant une teneur en enzyme pectine estérase qui est moins de 1 % de la teneur en enzyme pectine estérase du jus d'orange brut (102), et
- une machine de remplissage aseptique (115) configurée pour remplir de manière aseptique des paquets (117) avec le jus d'orange (108) produit par l'unité de mélange (109).

15. Système selon la revendication 14, où l'ultrafiltre (107) comprend une membrane de céramique ayant une taille de pores de 20 nanomètres et une taille de canaux de 4 millimètres.
